# EUROPEAN PATENT SPECIFICATION

(11) **EP 3 260 326 B1**
(45) Date of publication and mention of the grant of the patent: **21.10.2020**
(21) Application number: 16838574.8
(22) Date of filing: 24.08.2016
(51) Int. Cl.: B60M 1/26, B60M 1/12, B60M 1/24, B60M 1/30

(54) **TEMPERATURE COMPENSATION DEVICE FOR RIGID OVERHEAD CATENARY**
TEMPERATURKOMPENSATIONSVORRICHTUNG FÜR EINE STARRE OBERLEITUNG
DISPOSITIF DE COMPENSATION DE TEMPÉRATURE POUR CATÉNAIRE AÉRIENNE RIGIDE

(30) Priority: 25.08.2015 CN 201510526798
(43) Date of publication of application: 27.12.2017
(73) Proprietor: China Railway High-Speed Electrification Equipment Corporation Limited, Baoji Shaanxi 721013 (CN)
(72) Inventor: LIN, Jian, Baoji Shaanxi 721013 (CN); LI, Zengqin, Baoji Shaanxi 721013 (CN); LIU, Juan, Baoji Shaanxi 721013 (CN); YANG, Xuyao, Baoji Shaanxi 721013 (CN); GONG, Jiangang, Baoji Shaanxi 721013 (CN); HAO, Xinjuan, Baoji Shaanxi 721013 (CN); LI, Li, Baoji Shaanxi 721013 (CN); DENG, Xianglong, Baoji Shaanxi 721013 (CN); WANG, Hongxi, Baoji Shaanxi 721013 (CN)
(74) Representative: Cabinet Beau de Loménie
(86) International application number: PCT/CN2016/096602
(87) International publication number: WO 2017/032316

(56) References cited:
- EP-A1- 0 197 811
- WO-A1-2012/134387
- CN-A- 101 746 281
- CN-A- 101 823 448
- CN-A- 102 832 568
- CN-A- 105 059 139
- CN-U- 201 895 585
- CN-U- 202 935 190
- CN-U- 203 063 712
- CN-U- 204 915 348
- DE-A1-102011 006 308
- US-A- 4 016 961

## Description

### Technical Field

The invention belongs to the technical field of rail transit rigid catenary, in particular relates to an overhead rigid catenary temperature compensation device.

### Background of the Invention

An overhead rigid suspension busbar power supply system is stretchable in the line due to heat expansion and cold contraction. At present mainly a broken-type anchoring section joint structure is adopted for temperature compensation (patent No.: ZL 200420043748.1), at the joint two busbars are arranged in parallel at an interval of 200-300mm. The broken-type anchoring section joint structure has a high requirement on installation accuracy, has a complex layout and is mainly suitable for the requirement of a running speed not higher than 120km/h. There also exists adoption of an expansion element to perform temperature compensation, but due to structural problem of the currently used expansion element itself and a heavy weight of the expansion element, there may easily occur arcing and electric discharge phenomenon during usage of the line, so that much maintenance is needed and traffic safety is affected, thus such expansion element is not popularized and applied widely.

### Summary of the Invention

The present invention aims to solve technical problems of an overhead rigid catenary temperature compensation device which is installed in an overhead rigid catenary system, compensates for the heat expansion and cold contraction of the system produced due to temperature change, in order to realize good electrical continuity and smooth transition between anchoring sections, to ensure stable operation of locomotive and to improve safety and reliability of operation of locomotive.

The present invention provides an overhead rigid catenary temperature compensation device according to claim 1, including a left slide guide rail and a right slide guide rail, wherein one end of each of the left slide guide rail and the right slide guide rail is fixedly connected to an end of each of the busbars; slide ways and slide rails are manufactured throughout on inner side surfaces of the left slide guide rail and the right slide guide rail, and the two slide ways and the two slide rails are arranged to be staggered up and down, by inserting the slide rails into the slide ways on the opposite side, the left slide guide rail and the right slide guide rail are connected together to be relatively slidable freely; contact line latch grooves are manufactured throughout at lower ends of outer side surfaces of the left slide guide rail and the right slide guide rail, and the contact line latch grooves correspond to contact line latch grooves at lower ends of the busbars that are coupled to the contact line latch grooves; conducting rods are installed by conducting supports and parallel conducting pedestals on top surfaces of both of the left slide guide rail and the right slide guide rail, and middle sections of the conducting rods pass through the parallel conducting pedestals on the opposite side and are allowed to be slidably installed in the parallel conducting pedestals and to be relatively slidable freely along with the two slide guide rails.

One end of the parallel conducting pedestals is fixed on a top surface of the slide guide rail, and the other end has a circular through hole and is positioned on a top surface of the slide guide rail on the opposite side; a spring contact finger is embedded into the circular through hole, and the conducting rod pass through the spring contact finger.

The slide way is a circular groove channel, and a wear-resisting, self-lubricating and electric-conductive shaft sleeve is embedded in the slide way; the slide rail is a circular guide shaft, and an outer diameter of the circular guide shaft is adapted to an inner diameter of the shaft sleeve.

A top cross section of one end of each of the left slide guide rail and the right slide guide rail is the same with a top cross section of each of the busbars, such that the ends of the left slide guide rail and the right slide guide rail are fixedly connected to the ends of the busbars respectively by busbar package connectors.

A retractable protecting sheath sleeves on the conducting rod.

A surveying rod is disposed on the top surface of the left slide guide rail or the right slide guide rail.

DE 10 2011 006308 discloses expansion connection arrangement for adjoining conductor rails. Different combination solutions of the present invention have the following one or more advantages and effects as compared with the prior art:
1. Simple structure, easy installation, light weight, small self weight deflection, which can satisfy the requirement of rapid running at a speed higher than 120km/h.
2. Double slide ways and electric-conductive shaft sleeves fitting structure enable a smooth sliding, and direct connections of the slide ways to contact lines of adjacent anchoring sections respectively better ensure an altitude difference between the contact lines and ensure smooth transition and current collection quality of the pantograph, thereby avoiding occurrence of arcing and electrical discharge phenomenon when the pantograph passes so as to ensure traffic safety.
3. An electric current-carrying continuous connection carrier adopts a spring contact finger to produce stable contact and good elasticity, which can avoid stagnation phenomenon.
4. The conducting rod is sealed by a retractable protecting sheath, which can isolate dust and improve electric continuous connection performance.
5. The surveying rod can graphically display whether installation regulation satisfies the requirement of the temperature curve, to avoid quality problem caused by improper regulation and can satisfy compensation for 1000mm heat expansion and cold contraction.

### Brief Description of the Drawings

FIG. 1 is a structural schematic of the present invention;
FIG. 2 is a structural schematic of the present invention after a conducting rod protecting sheath is removed;
FIG. 3 is a structural schematic illustrating a left slide guide rail according to the present invention;
FIG. 4 is a structural schematic illustrating a right slide guide rail according to the present invention;
FIG. 5 is a structural leftview of the present invention;
FIG. 6 is a sectional view illustrating a parallel conducting pedestal according to the present invention;
FIG. 7 is a longitudinally sectional view illustrating that the conducting rod is matched with the parallel conducting pedestal according to the present invention.

### Detailed Description of the Embodiment

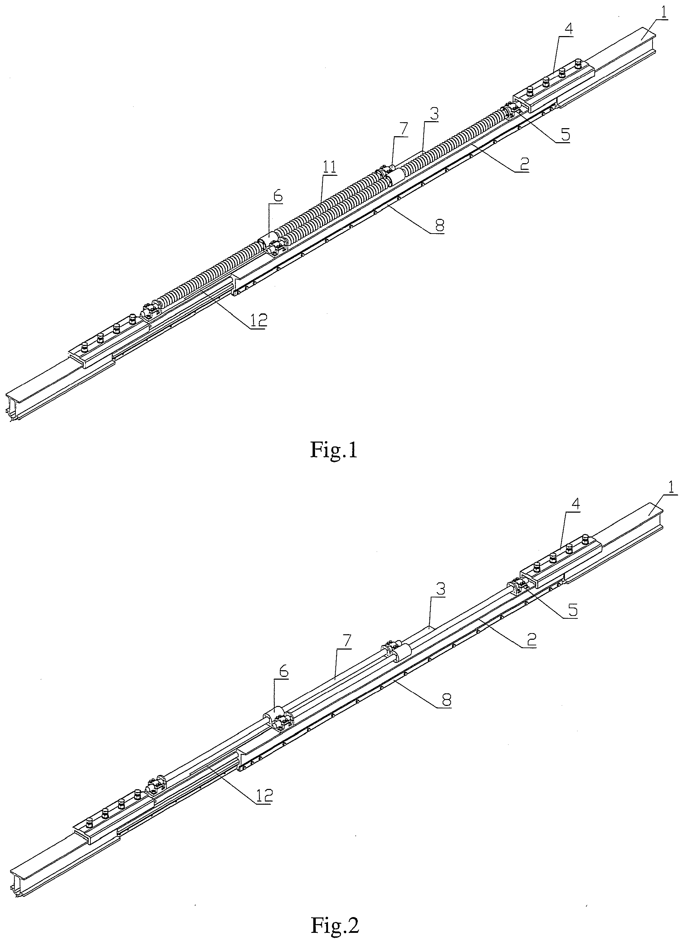

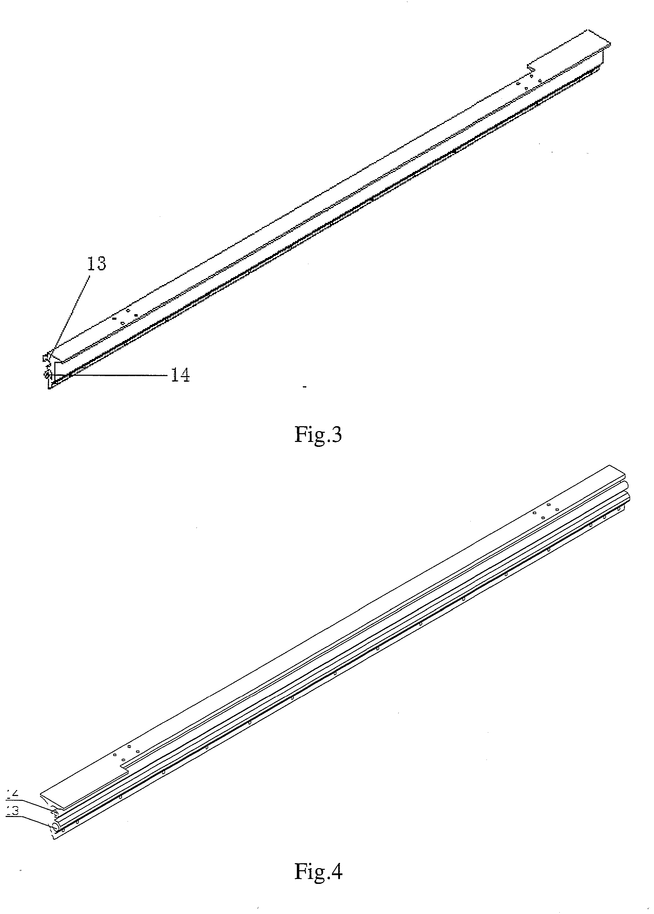

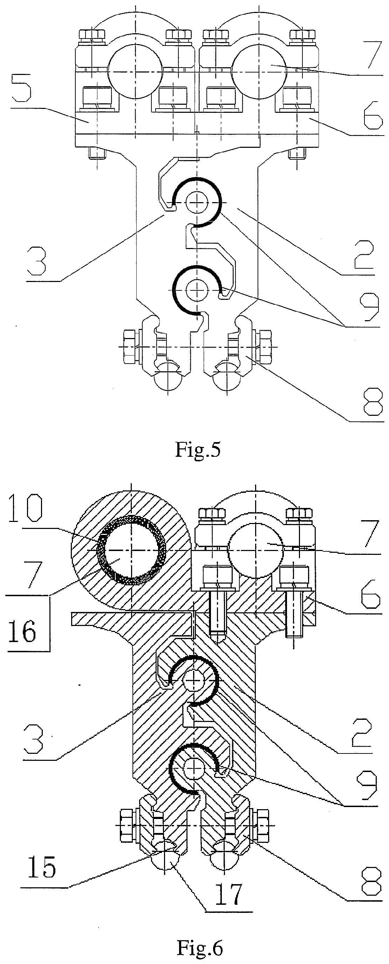

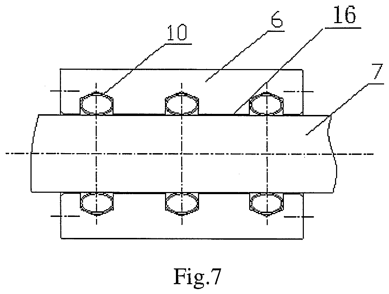

A specific embodiment of the present invention is now described in detail with reference to FIGs 1 to 7.

An overhead rigid catenary temperature compensation device comprises a left slide guide rail 2 and a right slide guide rail 3, wherein outer ends of the left slide guide rail 2 and a right slide guide rail 3 are fixedly connected to two-end busbars 1 respectively by busbar package connectors 4, and a top cross section of one end of each of the left slide guide rail 2 and the right slide guide rail 3 is the same with a top cross section of each of the busbars 1, to ensure reliable connection to the busbars. Slide ways 13 and slide rails 14 are manufactured throughout on inner side surfaces of the left slide guide rail 2 and the right slide guide rail 3, and two slide ways 13 and two slide rails 14 are arranged to be staggered up and down, by inserting the slide rails 14 on one side into the slide ways 13 on the opposite side, the left slide guide rail 2 and the right slide guide rail 3 are connected together to be relatively slidable freely along the guide rail direction; the slide way 13 is a circular groove channel, and a wear-resisting, self-lubricating and electric-conductive shaft sleeve 9 is embedded in the slide way 13; the slide rail 14 is a circular guide shaft, and an outer diameter of the circular guide shaft is adapted to an inner diameter of the shaft sleeve 9.

Conducting rods 7 are installed by conducting supports 5 and parallel conducting pedestals 6 on top surfaces of both of the left slide guide rail 2 and the right slide guide rail 3, wherein one end of the conducting rod 7 is fixed on the conducting support 5, and middle sections of the conducting rods 7 pass through the parallel conducting pedestals 6 on the opposite side and are allowed to be slidably installed in the parallel conducting pedestals and to be relatively slidable freely along with the two slide guide rails. The other end of the conducting rod 7 can also be fixed on the slide guide rail on the same side as the conducting support 5 where the one end of the conducting rod is fixed, by the parallel conducting pedestal 6. One end of the parallel conducting pedestal 6 is fixed on a top surface of the slide guide rail, and the other end has a circular through hole 16 and is positioned on a top surface of the slide guide rail on the opposite side; three spring contact fingers 10 are embedded into the circular through hole 16, and the conducting rods 7 pass through the spring contact fingers 10. By enclasping the conducting rods 7 all the time by the spring contact fingers 10, an electric current-carrying continuous connection is realized. A retractable protecting sheath 11 sleeves on the conducting rod 7 to protect the conducting rod 7 from dust and avoid dust from affecting the sliding and current carrying performances of the conducting rod.

A surveying rod 12 is disposed on the top surface of the left slide guide rail 2 or the right slide guide rail 3, for intuitively directing position adjustment in installation. Contact line latch grooves 15 are manufactured throughout at lower ends of outer side surfaces of the left slide guide rail 2 and the right slide guide rail 3, and the contact line latch grooves 15 correspond to contact line latch grooves at lower ends of the busbars 1 that are connected thereto. Adjacent anchoring section contact lines 17 installed on the two-end busbars 1 are fixedly connected to the left and right slide guide rails respectively by a line pressing clamp plate 8.

Wherein the left and right slide guide rails and the line pressing clamp plate are individually manufactured by a molding process of extruding aluminum alloys at a high accuracy. The conducting supports and the parallel conducting pedestals are made by casting copper or aluminum, with tin or silver plated on their surfaces, to avoid a possible electrochemical corrosion between copper and aluminum when the conducting rods are manufactured by a molding process of extruding copper.

In installation, a compensation gap is determined according to the installation temperature curve, and afterwards, the left and right slide guide rails are fixedly connected to the two-end busbars by the busbar package connectors. The contact line is fixed into the contact line latch groove of the slide guide rails by the line pressing clamp plate, and inclined planes of end portions (longitudinal end portions) of the contact lines are polished and painted with electric-conductive grease, and after related installation parameters are detected to be qualified, the installation is finished. The busbar package connectors adopt an existing patent product (ZL201320591858.0).

The left and right slide guide rails of the invention are designed in such a structure that slide ways and slide rails are matched up and down and are connected by slide shaft sleeves that are inlayed on respective slide ways, and by relative motion between the slide guide rails, compensation is realized for length of heat expansion and cold contraction of two adjacent anchoring sections caused due to temperature change; small distance and aligned installation (the smallest distance is 27mm) are realized between contact lines of ends of two adjacent anchoring sections by structural fitting and slide shaft sleeve position between two slide guide rails, to ensure smooth transition of the pantograph and avoid arcing and electrical discharge phenomenon; the slide shaft sleeve is made of a wear-resisting, self-lubricating and electric-conductive material, to avoid occurrence of electrical discharge phenomenon due to a potential difference between the left and right slide guide rails; electric current-carrying continuous connection is realized at the top of the two slide guide rails by the conducting rods that are installed individually and arranged in parallel to be slidable relatively and conducted with each other, so as to realize electrical continuation between two adjacent anchoring sections.

The above-described embodiment is merely a preferable embodiment of the invention, and is not to limit the scope of the invention, so that any equivalent change made in accordance with the contents stated in the claims of the invention shall be included within the scope of the claims of the invention.

## Claims

1. An overhead rigid catenary temperature compensation device, comprising a left slide guide rail (2) and a right slide guide rail (3), wherein one end of each of the left slide guide rail (2) and the right slide guide rail (3) is adapted to be fixedly connected to an end of each of two busbars (1); slide ways (13) and slide rails (14) are manufactured throughout on inner side surfaces of the left slide guide rail (2) and the right slide guide rail (3), and the two slide ways (13) and the two slide rails (14) are arranged to be staggered up and down, the slide way (13) is a circular groove channel, and a wear-resisting, self-lubricating and electric-conductive shaft sleeve (9) is embedded in the slide way (13); the slide rail (14) is a circular guide shaft, and an outer diameter of the circular guide shaft is adapted to an inner diameter of the shaft sleeve (9), by inserting the slide rails (14) into the slide ways (13) on the opposite side, the left slide guide rail (2) and the right slide guide rail (3) are connected together to be relatively slidable freely; contact line latch grooves (15) are manufactured throughout at lower ends of outer side surfaces of the left slide guide rail (2) and the right slide guide rail (3), and the contact line latch grooves (15) correspond to contact line latch grooves at lower ends of the busbars (1) that are coupled to the contact line latch grooves (15); conducting rods (7) are installed by conducting supports (5) and parallel conducting pedestals (6) on top surfaces of both of the left slide guide rail (2) and the right slide guide rail (3), one end of the conducting rod (7) is fixed on the conducting support (5), the other end of the conducting rod (7) is fixed on the slide guide rail on the same side as the conducting support (5) where the one end of the conducting rod is fixed by the parallel conducting pedestal (6), and middle sections of the conducting rods (7) pass through the parallel conducting pedestals (6) on the opposite side and are allowed to be slidably installed in the parallel conducting pedestals (6) and to be relatively slidable freely along with the two slide guide rails, one end of the parallel conducting pedestals (6) is fixed on a top surface of the slide guide rail, and the other end is positioned on a top surface of the slide guide rail on the opposite side .

2. The overhead rigid catenary temperature compensation device according to claim 1, **characterized in that**, the said other end of the parallel conducting pedestals (6) has a circular through hole (16); a spring contact finger (10) is embedded into the circular through hole (16), and the conducting rod (7) pass through the spring contact finger (10).

3. The overhead rigid catenary temperature compensation device according to claim 1 or 2, **characterized in that**, a top cross section of one end of each of the left slide guide rail (2) and the right slide guide rail (3) is configured to be the same with a top cross section of each of the busbars (1), and the ends of the left slide guide rail (2) and the right slide guide rail (3) are adapted to be fixedly connected to the ends of the busbars (1) respectively by busbar package connectors (4).

4. The overhead rigid catenary temperature compensation device according to claim 3, **characterized in that**, a retractable protecting sheath (11) sleeves on the conducting rod (7).

5. The overhead rigid catenary temperature compensation device according to claim 4, **characterized in that**, a surveying rod (12) is disposed on the top surface of the left slide guide rail (2) or the right slide guide rail (3).

## Patentansprüche

1. Temperaturkompensationsvorrichtung für eine starre Oberleitung, umfassend
eine linke Gleitführungsschiene (2) und eine rechte Gleitführungsschiene (3), wobei jeweils ein Ende von jeder der linken Gleitführungsschiene (2) und der rechten Gleitführungsschiene (3) dazu geeignet ist, mit einem Ende von jeder von zwei Sammelschienen (1) fest verbunden zu werden, wobei
Gleitbahnen (13) und Gleitschienen (14) durchgehend an inneren Seitenflächen der linken Gleitführungsschiene (2) und der rechten Gleitführungsschiene (3) hergestellt sind, und die zwei Gleitbahnen (13) und die zwei Gleitschienen (14) gestaffelt nach oben und unten angeordnet sind, die Gleitbahn (13) ein kreisförmiger Nutkanal ist und eine verschleißfeste, selbstschmierende und elektrisch leitfähige Wellenhülse (9) in die Gleitbahn (13) eingebettet ist, die Gleitschiene (14) eine kreisförmige Führungswelle ist, und ein Außendurchmesser der kreisförmigen Führungswelle an einen Innendurchmesser der Wellenhülse (9) angepasst ist, durch Einsetzen der Gleitschienen (14) in die Gleitbahnen (13) auf der gegenüberliegenden Seite die linke Gleitführungsschiene (2) und die rechte Gleitführungsschiene (3) miteinander verbunden sind, um relativ frei gleitfähig zu sein, Fahrleitungsarretierungsnuten (15) durchgehend an den unteren Enden der äußeren Seitenflächen der linken Gleitführungsschiene (2) und der rechten Gleitführungsschiene (3) hergestellt sind, und die Fahrleitungsarretierungsnuten (15) Fahrleitungsarretierungsnuten an den unteren Enden der Sammelschienen (1) entsprechen, die mit den Fahrleitungsarretierungsnuten (15) gekoppelt sind, Leitungsstangen (7) durch Leitungsträger (5) und parallele Leitungssockel (6) auf Oberseiten sowohl der linken Gleitführungsschiene (2) als auch der rechten Gleitführungsschiene (3) installiert sind, ein Ende der Leitungsstange (7) an dem Leitungsträger (5) befestigt ist, das andere Ende der Leitungsstange (7) an der Gleitführungsschiene auf derselben Seite wie der Leitungsträger (5) befestigt ist, an der das eine Ende der Leitungsstange durch den parallelen Leitungssockel (6) befestigt ist, und Mittelabschnitte der Leitungsstangen (7) durch die parallelen Leitungssockel (6) auf der gegenüberliegenden Seite verlaufen und in die parallelen Leitungssockel (6) gleitfähig installiert werden und mit den zwei Gleitführungsschienen relativ frei gleitfähig sein können, ein Ende der parallelen Leitungssockel (6) auf einer Oberseite der Gleitführungsschiene befestigt ist und das andere Ende auf einer Oberseite der Gleitführungsschiene auf der gegenüberliegenden Seite positioniert ist.

2. Temperaturkompensationsvorrichtung für eine starre Oberleitung nach Anspruch 1, **dadurch gekennzeichnet, dass** das andere Ende der parallelen Leitungssockel (6) ein kreisförmiges Durchgangsloch (16) aufweist, ein Federkontaktfinger (10) in das kreisförmige Durchgangsloch (16) eingebettet ist und die Leitungsstange (7) durch den Federkontaktfinger (10) verläuft.

3. Temperaturkompensationsvorrichtung für eine starre Oberleitung nach Anspruch 1 oder 2, **dadurch gekennzeichnet, dass** ein oberer Querschnitt von einem Ende von jeder von der linken Gleitführungsschiene (2) und der rechten Gleitführungsschiene (3) dazu ausgestaltet ist, einem oberen Querschnitt von jeder der Sammelschienen (1) gleich zu sein, und
die Enden der linken Gleitführungsschiene (2) und der rechten Gleitführungsschiene (3) geeignet sind, jeweils durch Sammelschienenpaketverbinder (4) fest mit den Enden der Sammelschienen (1) verbunden zu werden.

4. Temperaturkompensationsvorrichtung für eine starre Oberleitung nach Anspruch 3, **dadurch gekennzeichnet, dass** ein zurückziehbarer Schutzmantel (11) die Leitungsstange (7) umhüllt.

5. Temperaturkompensationsvorrichtung für eine starre Oberleitung nach Anspruch 4, **dadurch gekennzeichnet, dass** eine Vermessungsstange (12) auf der Oberseite der linken Gleitführungsschiene (2) oder der rechten Gleitführungsschiene (3) angeordnet ist.

## Revendications

1. Dispositif de compensation de température pour caténaire aérienne rigide comprenant un rail de guidage de coulissement gauche (2) et un rail de guidage de coulissement droit (3), dans lequel une extrémité de chacun parmi le rail de guidage de coulissement gauche (2) et le rail de guidage de coulissement droit (3) est adaptée pour être raccordée de manière fixe à une extrémité de chacune de deux barres omnibus (1) ; les voies de coulissement (13) et les rails de coulissement (14) sont fabriqués sur tout le long des surfaces latérales internes du rail de guidage de coulissement gauche (2) et du rail de guidage de coulissement droit (3) et les deux voies de coulissement (13) et les deux rails de coulissement (14) sont agencés pour être décalés de haut en bas, la voie de coulissement (13) est un canal de rainure circulaire, et un manchon d'arbre résistant à l'usure, autolubrifiant et électriquement conducteur (9) est intégré dans la voie de coulissement (13) ; le rail de coulissement (14) est un arbre de guidage circulaire, et un diamètre externe de l'arbre de guidage circulaire est adapté à un diamètre interne du manchon d'arbre (9), en insérant les rails de coulissement (14) dans les voies de coulissement (13) sur le côté opposé, le rail de guidage de coulissement gauche (2) et le rail de guidage de coulissement droit (3) sont raccordés ensemble pour pouvoir coulisser de manière relativement libre ; des rainures de verrou de ligne de contact (15) sont fabriquées sur toutes les extrémités inférieures des surfaces latérales externes du rail de guidage de coulissement gauche (2) et du rail de guidage de coulissement droit (3), et les rainures de verrou de ligne de contact (15) correspondent aux rainures de verrou de ligne de contact au niveau des extrémités inférieures des barres omnibus (1) qui sont couplées aux rainures de verrou de ligne de contact (15) ; des tiges conductrices (7) sont installées par des supports conducteurs (5) et des piédestaux conducteurs parallèles (6) sur les surfaces supérieures à la fois du rail de guidage de coulissement gauche (2) et du rail de guidage de coulissement droit (3), une extrémité de la tige conductrice (7) est fixée sur le support conducteur (5), l'autre extrémité de la tige conductrice (7) est fixée sur le rail de guidage de coulissement du même côté que le support conducteur (5) où la une extrémité de la tige conductrice est fixée par le piédestal conducteur parallèle (6) et des sections centrales des tiges conductrices (7) passent à travers les piédestaux conducteurs parallèles (6) sur le côté opposé et sont autorisées à être installées de manière coulissante dans les piédestaux conducteurs parallèles (6) et pouvoir coulisser de manière relativement libre conjointement avec les deux rails de guidage de coulissement, une extrémité des piédestaux conducteurs parallèles (6) est fixée sur une surface supérieure du rail de guidage de coulissement et l'autre extrémité est positionnée sur une surface supérieure du rail de guidage de coulissement sur le côté opposé.

2. Dispositif de compensation de température pour caténaire aérienne rigide selon la revendication 1, **caractérisé en ce que** ladite autre extrémité des piédestaux conducteurs parallèles (6) a un trou débouchant circulaire (16) ; un doigt de contact de ressort (10) est intégré dans le trou débouchant circulaire (16), et la tige conductrice (7) passe à travers le doigt de contact de ressort (10).

3. Dispositif de compensation de température pour caténaire aérienne rigide selon la revendication 1 ou la revendication 2, **caractérisé en ce qu'**une section transversale supérieure d'une extrémité de chacun parmi le rail de guidage de coulissement gauche (2) et le rail de guidage de coulissement droit (3) est configurée pour être la même qu'une section transversale supérieure de chacune des barres omnibus (1), et les extrémités du rail de guidage de coulissement gauche (2) et du rail de guidage de coulissement droit (3) sont adaptées pour être raccordées de manière fixe aux extrémités des barres omnibus (1) respectivement par des connecteurs de paquet de barres omnibus (4).

4. Dispositif de compensation de température pour caténaire aérienne rigide selon la revendication 3, **caractérisé en ce qu'**une gaine de protection rétractable (11) s'emmanche sur la tige conductrice (7).

5. Dispositif de compensation de température pour caténaire aérienne rigide selon la revendication 4, **caractérisé en ce qu'**un jalon (12) est disposé sur la surface supérieure du rail de guidage de coulissement gauche (2) ou le rail de guidage de coulissement droit (3).
